(19) Europäisches Patentamt
European Patent Office
Office européen des brevets

(11) **EP 4 706 912 A1**

(12) **EUROPEAN PATENT APPLICATION**
published in accordance with Art. 153(4) EPC

(43) Date of publication:
**11.03.2026  Bulletin 2026/11**

(21) Application number: **24862437.1**

(22) Date of filing: **12.07.2024**

(51) International Patent Classification (IPC):
**B25J 13/08** (2006.01)    **B23K 9/10** (2006.01)
**B23K 9/127** (2006.01)

(52) Cooperative Patent Classification (CPC):
**B23K 9/10; B23K 9/127; B25J 13/08**

(86) International application number:
**PCT/JP2024/025384**

(87) International publication number:
**WO 2025/052781 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023  JP 2023144116**

(71) Applicants:
• **Robot Industrial Basic Technology Collaborative Innovation Partnership**
**Tokyo 105-0003 (JP)**

• **National University Corporation Kobe University**
**Kobe-shi, Hyogo 657-8501 (JP)**

(72) Inventors:
• **YOKOKOHJI Yasuyoshi**
**Kobe-shi, Hyogo 657-8501 (JP)**
• **NAKAGAWA Shinichiro**
**Tokyo 105-0003 (JP)**
• **HIRAMOTO Shusuke**
**Kobe-shi, Hyogo 657-8501 (JP)**

(74) Representative: **Betten & Resch**
**Patent- und Rechtsanwälte PartGmbB**
**Maximiliansplatz 14**
**80333 München (DE)**

(54) **WELDING ROBOT SYSTEM**

(57)    Provided is a remote-controlled welding robot system that can reduce the deviation of a welding torch from a welding portion of a workpiece. A welding robot system 10 includes: a welding robot 11; a camera 12 that captures video of an unwelded welding portion of a workpiece 5; a display device 13 that displays the captured video; an acceptance unit 15 that accepts an instruction to correct a welding position from an operator in response to the display of the video; a robot control unit 16 that controls the welding robot 11 to perform welding based on teaching data and performs control for correcting the welding position according to the accepted instruction; an accumulation unit 17 that accumulates positions of multiple points on a trajectory of the welding by the welding robot 11; and a prediction unit 18 that predicts a welding path using the accumulated positions of the multiple points. The robot control unit 16 controls the welding robot 11 such that the welding torch moves along the predicted welding path.

FIG. 1

## Description

Technical field

The present invention relates to a welding robot system for remotely operating a welding robot.

Background Art

Welding processes of large structures such as ships and plant tanks are often performed in locations where operators cannot easily access, such as high places or narrow spaces. Therefore, automatic welding processes using welding robots have been introduced. Additionally, in such welding processes, if welding defects occur, they can lead to serious accidents. Therefore, high-quality welding, such as hermetically sealed welding, is required. In fully automated welding processes, it is sometimes impossible to ensure such high quality. Therefore, in welding robot systems that automatically weld workpieces, remote control is performed in which operators correct the target position of the welding torch to compensate for the deviation from the welding portion caused by thermal distortion or the like while viewing, from a remote location, video captured by a camera (see Patent Document 1, for example).

Citation List

Patent Document

Patent Document 1: JP S61-044595B

Summary of Invention

Technical Problem

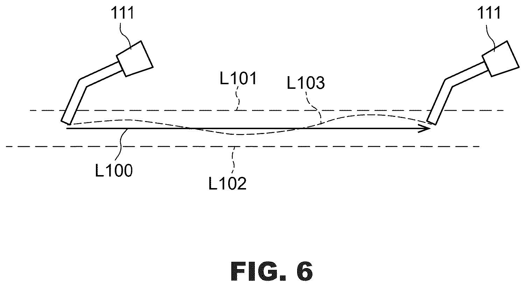

In welding, as shown in FIG. 6, it is ideal to be able to move a welding torch 111 along a target welding path L100. However, an actual welding trajectory L103 may deviate from the target welding path L100. If the degree of deviation falls within the range between boundary lines L101 and L102, which indicates the allowable range, there are no issues with the welding quality, but if the deviation exceeds the boundary line L101 or L102, issues with the welding quality occur.

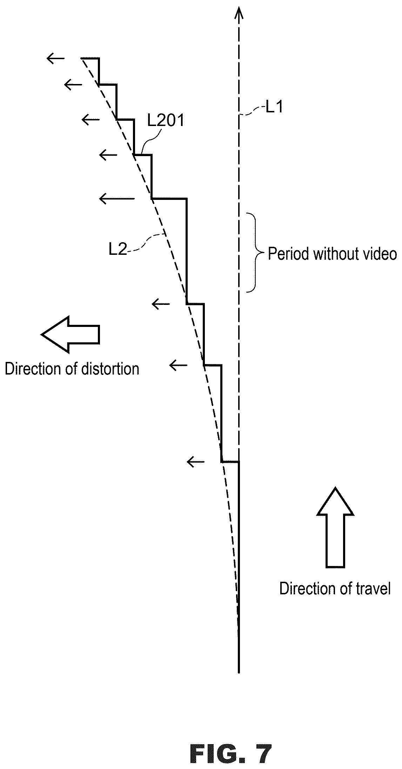

In a remote-controlled welding robot system, as shown in FIG. 7, the tip of the welding torch moves at a constant speed in the direction of travel along a teaching line L1 indicated by teaching data. In such a situation, for example, as shown in FIG. 7, a welding portion L2 of the workpiece may deform in the direction of distortion due to thermal distortion of the workpiece. In order to perform welding that follows this deformation, the operator corrects the target position of the welding torch as indicated by the solid arrows in FIG. 7 while viewing video captured by a camera. By performing this correction, the deviation of a welding trajectory L201 from the welding portion L2 can be suppressed within the allowable range. In such a situation in which remote-controlled correction is being performed, for example, if the video is lost for a certain period of time due to the influence of communication delays or the like, since correction cannot be performed during the period without video, the welding torch moves in the direction of the teaching line L1 as shown in FIG. 7, which results in the deviation of the welding trajectory L201 from the welding portion L2 of the workpiece exceeding the allowable range, leading to issues with the welding quality.

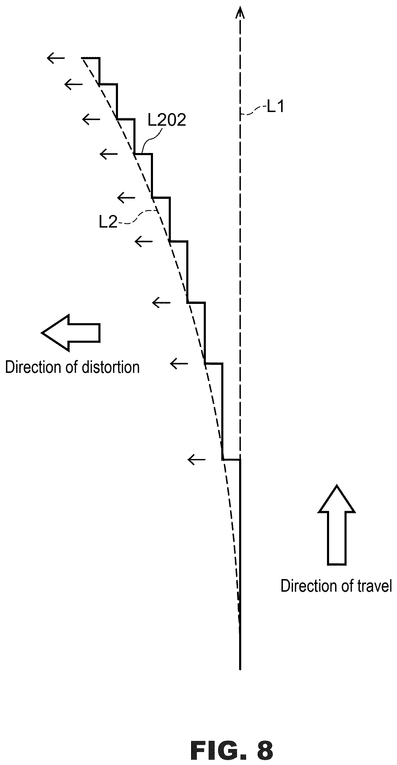

Even in the case in which there is no such period without video, if the deformation of the welding portion L2 due to thermal distortion of the workpiece is large, the frequency of corrections of a welding trajectory L202 increases as indicated by the solid arrows in FIG. 8. Furthermore, even if thermal distortion does not progress from the middle of welding and the welding trajectory L202 becomes straight from the middle, frequent corrections are necessary once the trajectory deviates from the initial teaching line L1. Since the operator performs corrections based solely on the video from the camera, frequent corrections can lead to increased operator fatigue. This reduces the time the operator can maintain concentration, necessitating the preparation of replacement personnel. This poses a significant burden in situations where there are few skilled operators.

The present invention was made in order to solve the above-described problems, and it is an object thereof to provide a remote-controlled welding robot system that can reduce the deviation of a welding torch from a welding portion of a workpiece.

Solution to Problem

In order to achieve the above-described object, an aspect of the present invention is directed to a welding robot system including: a welding robot that moves a welding torch; a camera that is mounted on the welding robot and that captures video of an unwelded welding portion of a workpiece; a display device that displays the video captured by the camera; an acceptance unit that accepts an instruction to correct a welding position from an operator in response to the display of the video by the display device; a robot control unit that controls the welding robot to perform welding based on teaching data and performs control for correcting the welding position according to the instruction accepted by the acceptance unit; an accumulation unit that accumulates positions of multiple points on a trajectory of the welding by the welding robot; and a prediction unit that predicts a welding path using the positions of the multiple points accumulated by the accumulation unit, wherein the robot control unit controls the welding robot such that the welding torch moves along the welding path predicted by the prediction unit.

With this configuration, even when an unwelded welding portion of a workpiece deforms due to thermal distortion, it is possible to reduce the deviation of a welding torch from the unwelded welding portion of the workpiece by moving the welding torch along a predicted welding path. As a result, it is possible to reduce the frequency of remote corrections performed by the operator, which makes it possible to reduce the operator fatigue. Therefore, for example, remote corrections can be performed with fewer operators. Furthermore, even when the video is lost for a certain period of time due to communication delays or the like, it is possible to reduce the possibility of the deviation of the welding torch exceeding the allowable range during that time, by moving the welding torch along a predicted welding path. That is to say, it is possible to provide a welding robot system that is more robust against communication delays.

Furthermore, the welding robot system according to an aspect of the present invention may be configured such that the prediction unit determines a position of an approximation line in a predetermined line shape so as to optimize an objective function based on a difference between the multiple points and the approximation line, and predicts the welding path according to the determined position of the approximation line.

With this configuration, it is possible to predict a welding path that fits multiple points on a trajectory of welding. In particular, in the case in which the approximation line is predicted using only the latest point on the trajectory of welding, if the operator mistakenly performs an excessively large correction, there is a possibility that the predicted approximation line deviates significantly from the ideal approximation line that is to be predicted. On the other hand, if the position of the approximation line is determined using multiple points on the trajectory of welding, it is possible to determine the position of the approximation line that minimizes the error from those multiple points, which makes it possible to determine an approximation line with smooth temporal changes without being excessively sensitive to errors at some of the points.

Furthermore, the welding robot system according to an aspect of the present invention may be configured such that the prediction unit optimizes the objective function in which the difference between the multiple points and the approximation line is assigned weight that decreases as a difference between the current time and a time at which welding was performed increases.

With this configuration, in the case of predicting the welding path, later portions on the trajectory of welding can have greater influence, and thus it is possible to predict a welding path that better fits the current welding portion. Furthermore, even when the unwelded welding portion of the workpiece gradually deforms due to thermal distortion or the like, it is possible to predict the welding path according to the latest status. For example, in the case in which the approximation line is predicted using only the latest point, as described above, there is a possibility that the predicted approximation line deviates significantly from the ideal approximation line when inappropriate corrections are made. Meanwhile, if the weights of multiple points are made equal, the latest trend of the trajectory of welding will not be reflected in the approximation line. On the other hand, if the weights that decrease as the difference between the current time and the time at which welding was performed increases are used, it becomes possible to determine the appropriate position of the approximation line that resolves these issues.

Furthermore, the welding robot system according to an aspect of the present invention may be configured such that the predetermined line shape is a straight line shape.

With this configuration, it becomes easier to predict the welding path.

Furthermore, the welding robot system according to an aspect of the present invention may be configured such that when the welding torch moves along the welding path predicted by the prediction unit, the display device displays video in which a direction of the welding path matches a predetermined orientation.

With this configuration, even when the direction of the welding path changes, the operator can correct the welding position while viewing video in which the direction of the welding path matches a predetermined orientation, leading to a reduction in the workload.

Furthermore, the welding robot system according to an aspect of the present invention may be configured such that when the welding torch moves along the welding path predicted by the prediction unit, the acceptance unit accepts a correction instruction in a direction perpendicular to the welding path.

With this configuration, when video in which the direction of the welding path matches a predetermined orientation is displayed, the operator can perform corrections in a more intuitive manner.

Advantageous Effects of Invention

With the welding robot system according to an aspect of the present invention, it is possible to reduce the deviation of a welding torch from a welding portion of a workpiece.

Brief Description of Drawings

FIG. 1 is a schematic view showing the configuration of a welding robot system according to an embodiment of the present invention.
FIG. 2 is a schematic view showing an example of the welding robot system in the embodiment.
FIG. 3 is a diagram showing an example of multiple points on a trajectory of welding and an approximation line in the embodiment.
FIG. 4 is a flowchart showing an operation of the welding robot system according to the embodiment.

FIG. 5A is a diagram illustrating a trajectory of welding and corrections thereof in the embodiment.
FIG. 5B is a diagram illustrating a trajectory of welding and corrections thereof in the embodiment.
FIG. 6 is a diagram illustrating the allowable range of welding.
FIG. 7 is a diagram illustrating a trajectory of welding and corrections thereof in conventional examples.
FIG. 8 is a diagram illustrating a trajectory of welding and corrections thereof in conventional examples.

Description of Embodiment

Hereinafter, an embodiment of a welding robot system according to the present invention will be described by way of an embodiment. The constituent elements and steps denoted by the same reference numerals in the following embodiment are similar or corresponding constituent elements and steps, and thus a description thereof may not be repeated. The welding robot system according to this embodiment remotely corrects the target position of welding, and moves a welding torch along a welding path predicted using a previous trajectory of welding.

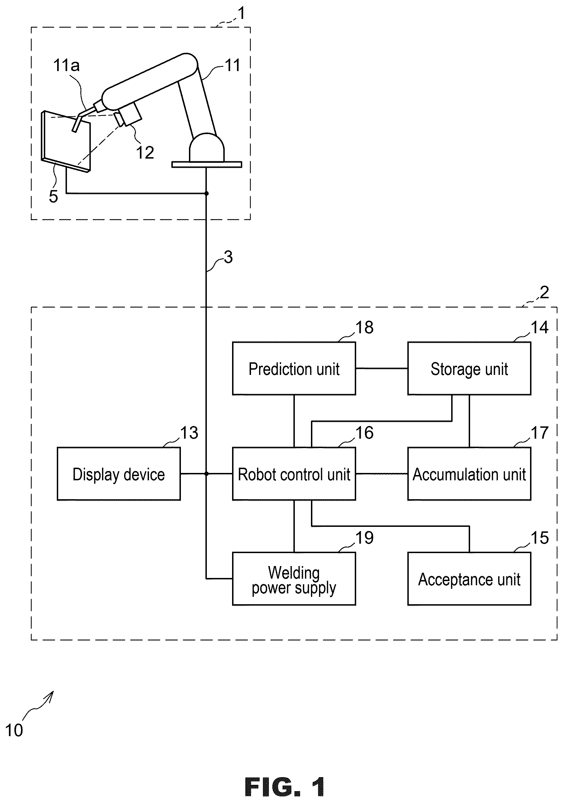

FIG. 1 is a schematic view showing the configuration of a welding robot system 10 according to this embodiment. The welding robot system 10 according to this embodiment includes a welding robot 11 that moves a welding torch 11a, a camera 12 that is mounted on the welding robot 11, a display device 13 that displays video captured by the camera 12, a storage unit 14 in which teaching data and the like are stored, an acceptance unit 15 that accepts an instruction to correct a welding position from an operator, a robot control unit 16 that controls the welding robot 11 based on teaching data and the like, an accumulation unit 17 that accumulates the positions of points on a trajectory of welding, and a prediction unit 18 that predicts a welding path using the accumulated positions of the points, and may further include a welding power supply 19 that supplies high voltage used for welding to the welding torch 11a and a workpiece 5, as necessary.

In this embodiment, as an example, a case will be mainly described in which as shown in FIG. 1, the welding robot 11 and the camera 12 are located at a work site 1 where welding is performed, and the display device 13, the storage unit 14, the acceptance unit 15, and the like are located at a remote location 2 where remote control is performed, and the units at the two locations are connected to each other via a cable 3. The cable 3 may include, for example, a communication line for transmitting video signals captured by the camera 12, a control line for transmitting control signals for the welding robot 11, and a welding cable for transmitting high voltage required for welding. As long as the welding robot 11 and the camera 12 are located at the work site 1 and the display device 13 and the acceptance unit 15 are located at the remote location 2, the other constituent elements may be located, for example, at the work site 1, at the remote location 2, or at other locations. This is because remote control can still be performed even in such cases.

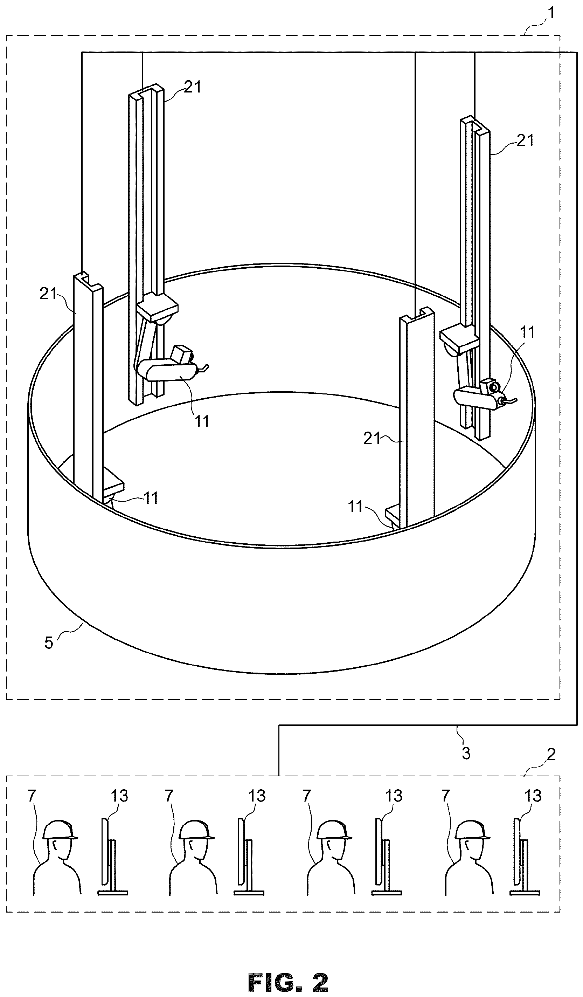

The welding robot 11 has the welding torch 11a, and performs welding of the workpiece 5 by moving the welding torch 11a. The welding robot 11 may be, for example, a vertical multi-joint robot with the welding torch 11a attached to its end, or may be another type of robot capable of moving the welding torch 11a in any three-dimensional direction. Furthermore, as shown in FIG. 2, the welding robot 11 itself may be moved by a moving device such as a lifting device 21. The lifting device 21 may include, for example, rails arranged in a vertical direction, a slider slidably mounted on the rails, and a moving unit for moving the slider in the vertical direction. The moving unit may include, for example, a rack and pinion and a driving unit for driving the pinion, or a ball screw and a driving unit for rotating a screw shaft. The welding robot 11 may be fixed to the slider. FIG. 2 shows a case in which welding of the workpiece 5 is performed at four portions by four welding robots 11 and four operators 7 who are checking the status of the respective welding portions on the display devices 13 correct the target welding positions of the respective welding robots 11, but the number of welding robots 11 included in the remote-controlled welding robot system 10 and the number of operators who remotely correct the target positions of the respective welding robots 11 are not limited thereto.

The welding performed by the welding robot 11 may be, for example, arc welding. In the remote-controlled welding robot system 10, TIG welding, which is a type of arc welding, is generally performed, but other types of arc welding such as MIG welding may also be performed. The arc welding performed by the welding robot 11 may be, for example, non-consumable electrode welding, such as TIG welding, or consumable electrode welding such as MIG welding.

The camera 12 is mounted on the welding robot 11, and captures video of an unwelded welding portion of the workpiece 5. The welding portion of the workpiece 5 may be, for example, a groove portion in groove welding, a fillet portion in fillet welding, or a butt portion in butt welding. The camera 12 captures video, which is moving images. It is preferable that the video captured by the camera 12 enables the degree of deviation of the tip of the welding torch 11a from the unwelded welding portion of the workpiece 5 to be seen. Therefore, the camera 12 may capture, for example, video of the unwelded welding portion of the workpiece 5, at a point thereof that is close to the tip of the welding torch 11a. The video that is to be captured by the camera 12 may include, for example, the tip of the welding torch 11a as well as the unwelded welding portion of the workpiece 5.

The display device 13 displays the video captured by the camera 12. For example, the display device 13 may receive video transmitted from the camera 12 via a communication line, and display the received video. The transmitted and received video is, in the strict sense, video signals, but it may be referred to simply as video for the sake of ease of description. the display device 13 may be, for example, a liquid crystal display, an organic EL display, or the like.

Teaching data for the welding robot 11 is stored in the storage unit 14. Based on this teaching data, for example, the movement path (e.g., position, posture, etc.) of the tip of the welding torch 11a may be indicated. For example, the teaching data may include information related to welding conditions, such as the start point and end point of welding, welding current, welding voltage, and the like. The accumulation unit 17 may accumulate the positions of points on a trajectory of welding, in the storage unit 14.

There is no limitation on the procedure in which teaching data is stored in the storage unit 14. For example, teaching data may be stored in the storage unit 14 via a recording medium, teaching data transmitted via a communication line or the like may be stored in the storage unit 14, or teaching data acquired at the time of teaching may be stored in the storage unit 14. The storage unit 14 is preferably realized by a non-volatile recording medium, but it may be realized by a volatile recording medium. The recording medium may be, for example, a semiconductor memory, a magnetic disk, or the like.

The acceptance unit 15 accepts an instruction to correct a welding position from an operator in response to the display of the video by the display device 13. That is to say, an instruction to correct a welding position is accepted from an operator who is viewing the video displayed by the display device 13. The operator corrects a welding position while viewing the video displayed on the display device 13. The correction of a welding position may be, for example, correction of a target position of the welding torch 11a. The instruction to correct a welding position may contain, for example, the direction of the correction of the welding position and the degree (distance) of the correction thereof. The direction of the correction may be selected, for example, from among predetermined directions. For example, the acceptance unit 15 may accept an instruction input from an input device (e.g., a teaching pendant, a joystick, etc.) or receive an instruction transmitted via a wired or wireless communication line. The acceptance unit 15 may or may not include a device for accepting an instruction (e.g., an input device, a communication device, etc.). The acceptance unit 15 may be realized by hardware or by software such as a driver that drives a predetermined device.

The robot control unit 16 controls the welding robot 11 to perform welding based on teaching data stored in the storage unit 14. The robot control unit 16 performs control for correcting a welding position according to an instruction accepted by the acceptance unit 15. That is to say, if an instruction for correcting a welding position is accepted by the acceptance unit 15, the robot control unit 16 controls the welding robot 11 such that the welding position is changed according to that instruction.

If a welding path is predicted by the prediction unit 18, the robot control unit 16 controls the welding robot 11 such that the welding torch 11a moves along that predicted welding path. In this manner, if there is a predicted welding path, the robot control unit 16 may control the welding robot 11 using that welding path, and if there is no predicted welding path, it may control the welding robot 11 using teaching data. If an instruction to correct a welding position is accepted, the robot control unit 16 may perform control for correcting the welding position according to that instruction. The control for correcting the welding position may be, for example, control for moving a target position of the welding torch 11a in a direction indicated by the accepted instruction to the extent indicated by the instruction. For example, if an instruction to correct a welding position indicates a corrected welding position, for example, the robot control unit 16 may control the welding robot 11 such that the target position of the welding torch 11a is the welding position indicated by the accepted instruction. The movement of the welding torch 11a along a predicted welding path may mean, for example, that the tip of the welding torch 11a moves on the predicted welding path, that is, that the welding position is located on the predicted welding path. Alternatively, as will be described later, if the approximation line and the welding path are identical, the movement may mean that the tip of the welding torch 11a moves in the direction of the welding path (i.e., the approximation line). In this embodiment, the former case will be mainly described. The tip of the welding torch 11a may be, for example, the target position of the welding torch 11a.

The accumulation unit 17 accumulates the positions of multiple points on the trajectory of welding by the welding robot 11, in the storage unit 14. The trajectory of welding may be, for example, a welded welding line. The position of a point that is to be accumulated may be, for example, the position corrected according to an accepted instruction to correct a welding position. In this case, each time an instruction to correct a welding position is accepted, the position of a point on the trajectory of welding, which is the corrected welding position, may be accumulated in the storage unit 14. For example, the positions of points on the trajectory of welding other than the corrected welding position may be accumulated in the storage unit 14. In this embodiment, a case will be mainly described in which each time a correction instruction is accepted, the position of a point on the trajectory of welding, which is the corrected welding position, is accumulated. The position of a point on the trajectory of welding may be, for example, coordinate values in a predetermined coordinate system such as a robot coordinate system. The accumulation unit 17 may accumulate, for example, the positions of multiple points in a manner that allows the order of accumulation to be identified. For example, the accumulation unit 17 may accumulate the positions of points each in association with the time at which the accumulation was performed.

The prediction unit 18 predicts a welding path using the positions of the multiple points accumulated by the accumulation unit 17. The prediction unit 18 may predict the welding path, for example, using the positions of a predetermined number of the latest points from among the accumulated positions of the multiple points. For example, the prediction unit 18 may determine the position of the approximation line in a predetermined line shape so as to optimize an objective function based on a difference between the multiple points whose positions have been accumulated and the approximation line, and predict the welding path according to the determined position of the approximation line. The approximation line may be, for example, a regression line in regression analysis. The welding path may be, for example, a path along which the tip of the welding torch 11a will move in the future. Therefore, the welding path may be considered, for example, to be a path corresponding to an unwelded welding line.

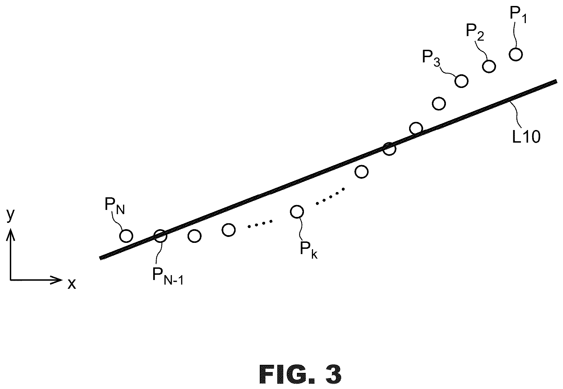

The predetermined line shape may be, for example, a straight line shape or a curved line shape without any inflection points. The curved line shape without any inflection points refers to a curve that does not have any inflection points along its length, and it may be, for example, an arc shape or a parabolic curve shape. In this embodiment, a case will be mainly described in which the approximation line in the predetermined line shape is straight. The difference between each point whose position has been accumulated and the approximation line may be, for example, the distance between that point and the approximation line. The distance may be, for example, the distance between them in a predetermined direction. Specifically, it may be the distance between an approximation line L10 and each point $P_1$ to $P_N$ in the y-axis direction in FIG. 3, which will be described later.

The objective function based on the difference between the accumulated multiple points and the approximation line in the predetermined line shape may be, for example, a function whose value increases as the difference (error) between the multiple points and the approximation line increases, or a function whose value decreases as the difference increases. In the former case, optimization involves minimizing the objective function, and in the latter case, optimization involves maximizing the objective function. In either case, the position of the approximation line is determined such that the difference between the multiple points and the approximation line is reduced by optimizing the objective function. That is to say, the position of the approximation line is determined such that it fits the multiple points. In this embodiment, a case will be mainly described in which the objective function is minimized.

Furthermore, the prediction unit 18 may optimize the objective function in which the difference between the multiple points and the approximation line is assigned weight that decreases as a difference between the current time and a time at which welding was performed increases. In this case, in the objective function, the difference between a point and the approximation line that is multiplied by weight that decreases as the difference between the current time and the time at which welding corresponding to that point was performed increases or that increases as the difference decreases. Accordingly, in the case of determining the position of the approximation line, a point that is closer to the current time can have greater influence on the determination of the position of the approximation line. Therefore, the position of the approximation line is determined such that it conforms to the shape of a portion welded at a later time, on the trajectory of welding, and thus, even when the trajectory of welding gradually deforms, it is possible to determine the position of the approximation line according to the latest shape. Furthermore, even when the welding portion of the workpiece 5 deforms as the welding progresses, it is possible to determine the position of the approximation line such that it conforms to the shape of a portion that is close to the current welding position.

Hereinafter, a method for determining the position of the approximation line L10 using the accumulated positions of the N points $P_1$ to $P_N$ as shown in FIG. 3 will be described. Note that N is an integer of 2 or more and may be predetermined. It is assumed that the position of the point $P_1$ is accumulated last. That is to say, it is assumed that in FIG. 3, the point $P_N$ is the earliest position on the welding line, and the point $P_1$ is the latest position on the welding line. Also, it is assumed that the coordinates of the point $P_k$ in the xy orthogonal coordinate system are $(x_k, y_k)$. Note that k is an integer ranging from 1 to N. The xy orthogonal coordinate system may be set, for example, such that if the teaching line indicated by the teaching data is straight, the x-axis matches the direction of the teaching line.

If the equation of the approximation line L10 in a straight line shape is y = a+bx, an objective function Q may be expressed by the following equation. Note that a and b are real numbers.

$$Q = \sum_{k=1}^{N} \omega_k (y_k - (a + bx_k))^2$$

In the above equation, $\omega_k$ is the weight expressed by the following equation. In the following equation, $\omega_0$ and L are constants that are positive real numbers. It is possible to adjust the degree of weighting for a late point by changing the value of L. It is possible to increase the weight for a later point by increasing the value of L. This weight is merely an example, and it will be appreciated that other types of weight may be used, such as weight that decreases as the distance from the current point increases, that is, weight that decreases as k increases.

$$\omega_k = \omega_0 e^{-kL}$$

In the equation of the objective function Q above, the case was shown in which the y-axis distance between a point and the straight line is squared and the position of the approximation line L10 is determined using weighted least squares, but there is no limitation to this. For example, the y-axis distance between a point and the straight line may be raised to the fourth power, and the absolute value of the distance may be used. The weight $\omega_k$ is set such that the weight increases as the point is accumulated later, that is, as the value of k is smaller. Therefore, this weight $\omega_k$ decreases as the difference between the current time and the time at which welding was performed increases. If weights are not used, for example, $\omega_k$ can be set to 1 in the above equation.

The prediction unit 18 can determine the values of a and b by optimizing the objective function Q above, thereby determining the approximation line y = a+bx. The optimization in this case is minimization. The prediction unit 18 may use, for example, this approximation line as the welding path. In this case, in order to ensure that the current welding position is close to the approximation line, it is preferable that the weight of the latest point on $P_1$ is set to be larger than the other weights, that is, L is set to a larger value.

Furthermore, the prediction unit 18 may use, for example, a straight line extending parallel to this approximation line from the current welding position as the welding path. If the current welding position is at the point $P_1$, the prediction unit 18 may use, for example, a straight line passing through the point $P_1$ and extending in the direction of the slope b obtained by optimization as the welding path. In this embodiment, this case will be mainly described.

The welding power supply 19 supplies high voltage for use in welding to the welding torch 11a and the workpiece 5. The welding power supply 19 may supply high voltage, for example, in response to instructions from the robot control unit 16. If consumable electrode arc welding is performed by the welding robot 11, the welding power supply 19 may also control the supply of welding wires.

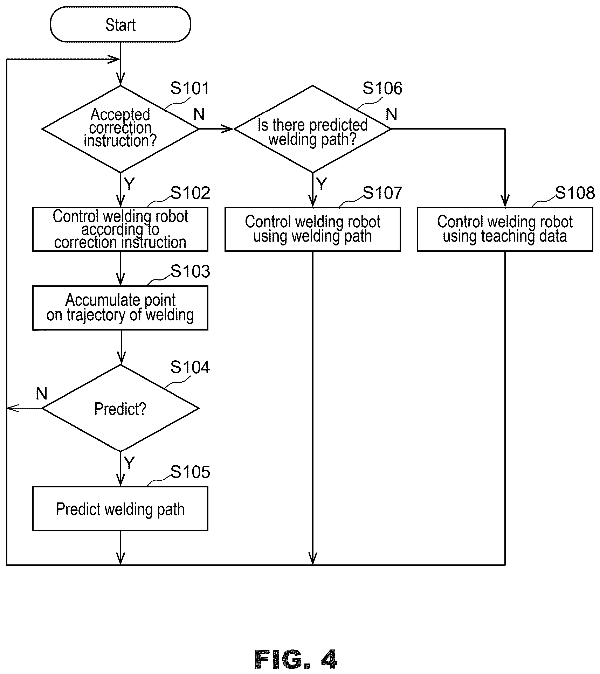

Next, the operation of the welding robot system 10 will be described with reference to the flowchart in FIG. 4.

(Step S101) The acceptance unit 15 determines whether or not it has accepted an instruction to correct a welding position. If it has accepted a correction instruction, the procedure advances to step S102, or otherwise the procedure advances to step S106.

(Step S102) The robot control unit 16 performs control for correcting the welding position according to the accepted instruction. In response to this control, the target position of the welding torch 11a of the welding robot 11 is changed.

(Step S103) The accumulation unit 17 accumulates the position of a point on the trajectory of welding, in the storage unit 14. The position of a point that is to be accumulated may be, for example, a corrected welding position.

(Step S104) The prediction unit 18 determines whether or not to predict the welding path. If it is to predict the welding path, the procedure advances to step S105, or otherwise the procedure returns to step S101. The prediction unit 18 may determine to predict the welding path, for example, in the case in which the positions of a predetermined number or more points are stored in the storage unit 14.

(Step S105) The prediction unit 18 predicts the welding path, using the positions of multiple points stored in the storage unit 14. For example, the prediction unit 18 may determine the position of the approximation line by optimizing an objective function based on a difference between the multiple points and the approximation line, and predict the welding path using the determined position of the approximation line. Information indicating the predicted welding path may be accumulated, for example, in the storage unit 14 or the like. Then, the procedure returns to step S101.

(Step S106) The robot control unit 16 determines whether or not there is a predicted welding path. If there is a predicted welding path, the procedure advances to step S107, or otherwise the procedure advances to step S108.

(Step S107) The robot control unit 16 controls the welding robot 11 such that the welding torch 11a moves along the predicted welding path. Then, the procedure returns to step S101. Through repeated execution of this control, the welding torch 11a moves along the predicted welding path.

(Step S108) The robot control unit 16 controls the welding robot 11 according to the teaching data stored in the storage unit 14. Then, the procedure returns to step S101. Through repeated execution of this control, the welding robot 11 operates in accordance with the teaching data. That is to say, the welding torch 11a of the welding robot 11 moves as taught.

In steps S102, S107, and S108 in the flowchart in FIG. 4, the robot control unit 16 may control the welding power supply 19 such that welding is performed under predetermined welding conditions. The welding conditions may be, for example, included in the teaching data. The order of the processes in the flowchart in FIG. 4 is merely an example, and the order of the steps may be changed as long as similar results can be obtained. Although not shown in the flowchart of FIG. 4, video of the welding portion may be captured by the camera 12, and the captured video may be displayed on the display device 13. The operator who is correcting the welding position may input correction instructions via an input device such as a teaching pendant or a joystick while viewing the displayed video. In the flowchart in FIG. 4, the processing ends at power off or at an interruption of terminating processing.

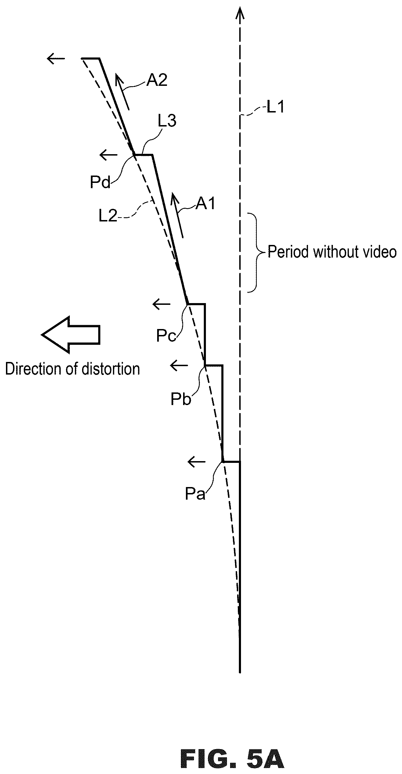

Next, the operation of the welding robot system 10 according to this embodiment will be described by way of a specific example. In this specific example, it is assumed that the teaching line L1 is set as shown in FIG. 5A and, due to thermal distortion of the workpiece 5, the welding portion L2 of the workpiece 5 gradually deviates from the teaching line L1 in the direction of distortion shown as the leftward orientation in the drawing.

First, the welding torch 11a is moved along the teaching line L1 in accordance with the teaching data, and welding is performed along the teaching line L1 (steps S101, S106, and S108). Video of the welding portion is captured by the camera 12 and displayed on the display device 13. If it is seen from the video that the welding position has deviated from the welding portion L2 of the workpiece 5, the operator operates an input device to input an instruction for correcting the welding position. This input is accepted by the acceptance unit 15 and passed to the robot control unit 16 (step S101). Upon receiving the instruction to correct the welding position, the robot control unit 16 controls the welding robot 11 according to that instruction and changes the welding position (step S102). It is assumed that as a result of this control, the welding position is changed to a position Pa in FIG. 5A. In response to this change, the robot control unit 16 passes the coordinate values of the position Pa in the robot coordinate system to the accumulation unit 17. Upon receiving these coordinate values, the accumulation unit 17 accumulates the coordinate values of the position Pa in the storage unit 14 (step S103).

It is assumed that in this specific example, the prediction of the welding path is performed using the latest three accumulated positions. At this time, only one position has been accumulated, and thus the prediction unit 18 determines not to predict the welding path (step S104). Then, the welding continues in the direction of travel indicated by the teaching data (steps S101, S106, and S108).

Furthermore, if an instruction for correcting a welding position is again accepted from the operator (step S101), in response to that instruction, the welding position is changed to a position Pb in FIG. 5A (step S102), and the coordinate values of the position Pb are accumulated in the storage unit 14 (step S103). At this time as well, only two positions have been accumulated, and thus the prediction of the welding path is not performed (step S104).

Subsequently, if an instruction for correcting a welding position is accepted once again from the operator (step S101), in response to that instruction, the welding position is changed to a position Pc in FIG. 5A (step S102), and the coordinate values of the position Pc are accumulated in the storage unit 14 (step S103). At this time, three positions have been stored in the storage unit 14, and thus the prediction unit 18 determines to predict the welding path (step S104), determines the position of the approximation line in a straight line shape using the positions of the three points Pa, Pb, and Pc, predicts the welding path passing through the point Pc and extending in the direction of the approximation line, and passes the predicted welding path to the robot control unit 16 (step S105). The welding path that is passed to the robot control unit 16 may be, for example, information indicating the welding path in the robot coordinate system.

Upon receiving the predicted welding path, the robot control unit 16 controls the welding robot 11 such that the welding torch 11a moves along that predicted welding path (steps S101, S106, and S107). As a result, welding is performed from the point Pc in the direction of the arrow A1 as shown in FIG. 5A. In this manner, the deviation of a welding trajectory L3 from the welding portion L2 of the workpiece 5 is reduced by moving the welding torch 11a along the predicted welding path. In this manner, the number of instructions to correct the welding position is reduced, and thus the operator fatigue is reduced. Furthermore, as shown in FIG. 5A, even if there is a period without video, the possibility of a deviation exceeding the allowable range during that period is reduced, and thus the welding quality can be improved.

Furthermore, if an instruction for correcting a welding position is again accepted from the operator (step S101), in response to that instruction, the welding position is changed to a position Pd in FIG. 5A (step S102), and the coordinate values of the position Pd are accumulated in the storage unit 14 (step S103). Then, the prediction unit 18 determines the position of the approximation line in a straight line shape using the positions of the three points Pb, Pc, and Pd, predicts the welding path passing through the point Pd and extending in the direction of the approximation line, and passes the predicted welding path to the robot control unit 16 (steps S104 and S105). The robot control unit 16 controls the welding robot 11 such that welding is performed along that predicted welding path (steps S101, S106, and S107). In this manner, welding is performed from the point Pd in the direction of the arrow A2 in FIG. 5A.

In this specific example, the case was described in which the prediction of the welding path is started after a predetermined number of points are accumulated, but there is no limitation to this. For example, the prediction of the welding path may be performed from the time when the first point is accumulated by assuming a dummy welding line in the opposite direction of the teaching line L1 from the weld start point and setting multiple points in advance on the dummy welding line. Accordingly, for example, it is possible to predict the welding path even at the time when the coordinate values of the point Pa are accumulated.

As described above, with the welding robot system 10 according to this embodiment, even when an unwelded welding portion of the workpiece 5 deforms due to thermal distortion, since the welding torch 11a can be moved along a welding path predicted according to the deformation, it is possible to reduce the deviation of a welding position of the welding torch 11a from the unwelded welding portion of the workpiece 5. As a result, it is possible to reduce the frequency of remote corrections performed by the operator, which makes it possible to reduce the operator fatigue. Therefore, for example, remote corrections can be performed with fewer operators. Furthermore, even when the video is lost for a certain period of time due to communication delays or the like, it is possible to reduce the possibility of the deviation of the welding torch 11a exceeding the allowable range during that time because the welding torch 11a can be moved along a welding path predicted according to the welding portion after deformation. That is to say, it is possible to provide a welding robot system 10 that is more robust against communication delays. Furthermore, it seems that when thermal distortion occurs in the workpiece 5, for example, the welding portion of the workpiece 5 tends to deviate in one direction as shown in FIG. 5A, and thus it is possible to achieve high-precision prediction of the welding path by predicting the welding path using the trajectory of welding in this manner.

Furthermore, if the position of the approximation line is determined so as to optimize an objective function based on a difference between multiple points on a trajectory of welding and the approximation line, and the welding path is predicted using the approximation line, it is possible to predict a welding path that fits those multiple points. If the objective function in which the difference between the multiple points and the approximation line is assigned weight that decreases as the difference between the current time and the time at which welding was performed increases is optimized, in the case of predicting the welding path, later points on the trajectory of welding can have greater influence, and thus it is possible to predict a welding path that better fits the current welding portion, for example. Furthermore, even when the unwelded welding portion of the workpiece 5 gradually deforms due to thermal distortion or the like, it is possible to predict the welding path according to the latest status.

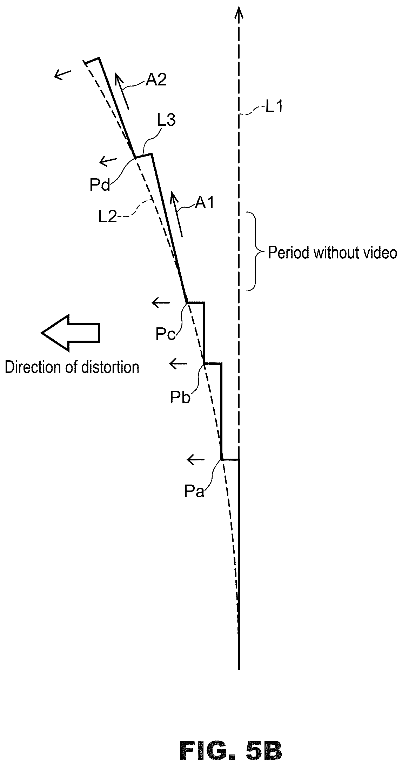

In this embodiment, the case was mainly described in which welding position is corrected in the direction perpendicular to the teaching line L1, but there is no limitation to this. For example, when the welding torch 11a moves along a welding path L3 predicted by the prediction unit 18, the acceptance unit 15 may accept an instruction to correct the welding position in the direction perpendicular to the welding path L3, and the robot control unit 16 may correct the welding position according to that instruction. When the welding torch 11a moves along the welding path L3 predicted by the prediction unit 18, for example, the display device 13 may display video in which the direction of the welding path L3 matches a predetermined orientation. The predetermined orientation may be, for example, a predetermined orientation (e.g., left-right direction, etc.) on the display screen of the display device 13. More specifically, the video may be displayed such that the direction of the welding path matches the left-right direction (horizontal direction) of the display screen. Such display may be performed, for example, by changing the orientation of the camera 12 or through image processing. When a straight welding path is displayed in the left-right direction, the acceptance unit 15 may accept an instruction to correct the welding position in the vertical direction, which is perpendicular to the horizontal direction. By performing such correction, the operator can correct the welding position in a more intuitive manner. Furthermore, even when the orientation of the welding path varies in various directions, the operator can perform the same correction operation, leading to a reduction in the workload. In this case, for example, as shown in FIG. 5B, when welding is performed in the direction of the arrow A1, the welding position is corrected in the direction perpendicular to that direction, and when welding is performed in the direction of the arrow A2, the welding position is corrected in the direction perpendicular to that direction. For example, if the welding path is straight, the direction of the welding path may be the direction of the straight welding path, or if the welding path is curved, it may be the direction of the tangent of the welding path at the current welding position. Also, for example, if the welding path is straight, the direction perpendicular to the welding path may be the direction perpendicular to the straight welding path or if the welding path is curved, it may be the direction perpendicular to the tangent of the welding path at the current welding position.

Furthermore, in the foregoing embodiment, each process or each function may be realized through centralized processing using a single apparatus or a single system, or may be realized through distributed processing using multiple apparatuses or multiple systems.

Furthermore, the foregoing embodiment is an example for specific implementation of the present invention and is not intended to limit the technical scope of the invention. The technical scope of the invention is indicated by the claims rather than by the foregoing description, and changes which come within the wording and equivalent meanings of the scope of the claims are intended to be encompassed therein.

**Claims**

1.  A welding robot system comprising:

    a welding robot that moves a welding torch;
    a camera that is mounted on the welding robot and that captures video of an unwelded welding portion of a workpiece;
    a display device that displays the video captured by the camera;
    an acceptance unit that accepts an instruction to correct a welding position from an operator in response to the display of the video by the display device;
    a robot control unit that controls the welding robot to perform welding based on teaching data and performs control for correcting the welding position according to the instruction accepted by the acceptance unit;

an accumulation unit that accumulates positions of multiple points on a trajectory of the welding by the welding robot; and

a prediction unit that predicts a welding path using the positions of the multiple points accumulated by the accumulation unit,

wherein the robot control unit controls the welding robot such that the welding torch moves along the welding path predicted by the prediction unit.

2. The welding robot system according to claim 1, wherein the prediction unit determines a position of an approximation line in a predetermined line shape so as to optimize an objective function based on a difference between the multiple points and the approximation line, and predicts the welding path according to the determined position of the approximation line.

3. The welding robot system according to claim 2, wherein the prediction unit optimizes the objective function in which the difference between the multiple points and the approximation line is assigned weight that decreases as a difference between the current time and a time at which welding was performed increases.

4. The welding robot system according to claim 2 or 3, wherein the predetermined line shape is a straight line shape.

5. The welding robot system according to any one of claims 1 to 3, wherein when the welding torch moves along the welding path predicted by the prediction unit, the display device displays video in which a direction of the welding path matches a predetermined orientation.

6. The welding robot system according to claim 5, wherein when the welding torch moves along the welding path predicted by the prediction unit, the acceptance unit accepts a correction instruction in a direction perpendicular to the welding path.

FIG. 1

**FIG. 2**

**FIG. 3**

Start

S101
Accepted correction instruction?
N → S106
Is there predicted welding path?
N → 

Y ↓ S102
Control welding robot according to correction instruction

Y ↓ S107
Control welding robot using welding path

↓ S108
Control welding robot using teaching data

↓ S103
Accumulate point on trajectory of welding

↓ S104
N ← Predict?

Y ↓ S105
Predict welding path

**FIG. 4**

A2

L3

Pd

L2 — A1

Period without video

L1

Direction of distortion

Pc

Pb

Pa

**FIG. 5A**

A2

L3

Pd

L2

A1

L1

Period without video

Direction of distortion

Pc

Pb

Pa

**FIG. 5B**

**FIG. 6**

L201

L1

L2

Period without video

Direction of distortion

Direction of travel

FIG. 7

Direction of distortion

Direction of travel

L1

L202

L2

**FIG. 8**

## INTERNATIONAL SEARCH REPORT

| International application No. |
|---|
| **PCT/JP2024/025384** |

### A. CLASSIFICATION OF SUBJECT MATTER

**B25J 13/08**(2006.01)i; **B23K 9/10**(2006.01)i; **B23K 9/127**(2006.01)i
FI:  B25J13/08 A; B23K9/10 A; B23K9/127 509F

According to International Patent Classification (IPC) or to both national classification and IPC

### B. FIELDS SEARCHED

Minimum documentation searched (classification system followed by classification symbols)

B25J1/00-21/02; B23K9/10; B23K9/127

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2-75492 A (KABUSHIKI KAISHA TOSHIBA) 15 March 1990 (1990-03-15) page 3, upper right column, line 14 - page 5, lower right column, line 4, fig. 1-5 | 1-2, 4-6 |
| A |  | 3 |
| Y | JP 2002-96169 A (KABUSHIKI KAISHA TOSHIBA) 02 April 2002 (2002-04-02) paragraphs [0024], [0030] | 1-2, 4-6 |
| Y | JP 2003-1420 A (HITACHI, LTD.) 08 January 2003 (2003-01-08) paragraph [0010], fig. 1 | 1-2, 4-6 |
| Y | JP 2023-84062 A (FANUC CORPORATION) 16 June 2023 (2023-06-16) paragraph [0014] | 2, 4 |
| A | JP 2008-238227 A (KABUSHIKI KAISHA KOBE SEIKO SHO) 09 October 2008 (2008-10-09) entire text, all drawings | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 August 2024** | **10 September 2024** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/025384**

| Patent document cited in search report | | | Publication date (day/month/year) | Patent family member(s) | | Publication date (day/month/year) |
|---|---|---|---|---|---|---|
| JP | 2-75492 | A | 15 March 1990 | (Family: none) | | |
| JP | 2002-96169 | A | 02 April 2002 | (Family: none) | | |
| JP | 2003-1420 | A | 08 January 2003 | (Family: none) | | |
| JP | 2023-84062 | A | 16 June 2023 | US 2023/0302645 A1 paragraph [0023] DE 102022102124 A1 CN 116214495 A | | |
| JP | 2008-238227 | A | 09 October 2008 | (Family: none) | | |

Form PCT/ISA/210 (patent family annex) (July 2022)

**REFERENCES CITED IN THE DESCRIPTION**

**Patent documents cited in the description**

- JP S61044595 B